# EUROPEAN PATENT SPECIFICATION

(11) **EP 1 169 524 B1**
(45) Date of publication and mention of the grant of the patent: **03.03.2004**
(21) Application number: 00917193.5
(22) Date of filing: 10.04.2000
(51) Int. Cl.: E04B 1/41, E04G 23/02, F16B 15/06, B21G 3/30

(54) **WALL TIE FASTENER**
HOHLWANDANKER
ELEMENT DE FIXATION MURALE

(30) Priority: 09.04.1999 GB 9907993
(43) Date of publication of application: 09.01.2002
(73) Proprietor: Knight, Olivia, Portsmouth PO1 5LB (GB)
(72) Inventor: Knight, Keith, Portsmouth, Hampshire PO1 5LB (GB); Knight, Olivia, Portsmouth, Hampshire PO1 5LB (GB)
(74) Representative: Brooks, Nigel Samuel
(86) International application number: PCT/GB2000/001311
(87) International publication number: WO 2000/061887

(56) References cited:
- EP-A- 0 494 723
- WO-A-89/10805
- GB-A- 2 262 560
- US-A- 2 095 153
- US-A- 5 586 605

## Description

The present invention relates to a fastener, in particular but not exclusively a drive fastener.

A large variety of drive fasteners, such as nails, are known. They rely upon friction with the material into which they are driven to grip the material. For many purposes a plain wire nail is adequate. Nails having a "slow" helical twist are known and they generally have an improved grip. Where the helical twist is "fast", the fastener is usually a screw, removable by unscrewing.

A particular type of fastener is a wall tie, which ties the two skins of a wall together. Original wall ties can rust away. European Patent No 171,250 and British Patent No. 2,262,560 describe two helical fasteners for replacing original wall ties. These fasteners are generally fitted in clearance bores in the first skin and by being driven into a pilot bore in the second skin. Once fast in the second skin, they are adhered into the first skin.

The object of the present invention is to provide an improved helical fastener, particularly one which can be driven into a pilot hole in steel work.

According to one aspect of the invention there is provided a fastener comprising:
- a longitudinal core,
- at least two minor fins extending along the core and
- at least two major fins extending along the core, the major fins alternating with the minor fins around the core,
the fastener being helically twisted
characterised in that the ratio of diameter of the major fins to the minor fins is between 1.5:1 and 3:1
and in that the both the major and the minor fins taper to an edge
such that the major fins are adapted for cutting into a material having one density and the minor fins are adapted for cutting into a material having a higher density, the major fins being adapted to deform or shear off on entry into the material having the higher density..

Typically the fastener is of hardened steel, preferably stainless or galvanised steel, whereby it can be used as a wall tie without risk of rusting away.

Preferably the ration of the diameter of the major fins to the minor fins is of the order of 2:1.

Normally the fastener will be pointed at both ends, although it can be envisaged that it be pointed at one end only.

In one embodiment, the major fins do not extend to one end at least of the fastener, to facilitate its insertion into a hard-material member to which a soft material member is being fastened.

In the preferred embodiments, the fastener has one pair of major fins and one pair of minor fins or one pair of major fins and two pairs of minor fins. However, other arrangements of at least two major fins and at least two minor fins, the total number of fins being even and greater than four can be envisaged.

According to another aspect of the invention there is provided method of producing a fastener having one pair of major fins and one pair of minor fins, the method consisting in the steps of:
- providing four rollers rotatable about respective axes quadrilaterally arranged in a plane, each roller having at least two frusto-conical portions arranged base to base and adjacent rollers touching or closely approaching each other at the respective small diameter ends of the frusto-conical portions, gaps between the rollers defining the shape of the fins of the fastener;
- passing a wire between the rollers to form it to the major and minor fin shape thereof and to work harden it;
- helically twisting the finned product;
- cropping the product to fastener lengths; and
- pointing the lengths.

A method of producing a fastener having at least two major fins and at least two minor fins, the total number of fins being even and greater than four, the method consisting in the steps of:
- providing a plurality of rollers corresponding to the number of fins, the rollers being rotatable about respective axes arranged in a plane, each roller having at least two frusto-conical portions arranged base to base and adjacent rollers touching or closely approaching each other at the respective small diameter ends of the frusto-conical portions, gaps between the rollers defining the shape of the fins of the fastener;
- passing a wire between the rollers to form it to the major and minor fin shape thereof and to work harden it;
- helically twisting the finned product;
- cropping the product to fastener lengths; and
- pointing the lengths

To help understanding of the invention, a specific embodiment thereof will now be described with reference to the accompanying drawing, in which:
Figure 1 is a cross-sectional end view of one fastener of the invention;
Figure 2 is a broken side view of the fastener of Figure 1;
Figure 3 is an end view similar to Figure 1 of another fastener of the invention;
Figure 4 is a side view on a smaller scale of a fastener of the invention fastening a timber to a piece of steelwork;
Figure 5 is a side view of another fastener of the invention fastening two skins of brickwork together;
Figure 6 is a view similar to Figure 2 of a modified fastener; and
Figure 7 is a front view of a set of rollers for forming a fastener of the invention.

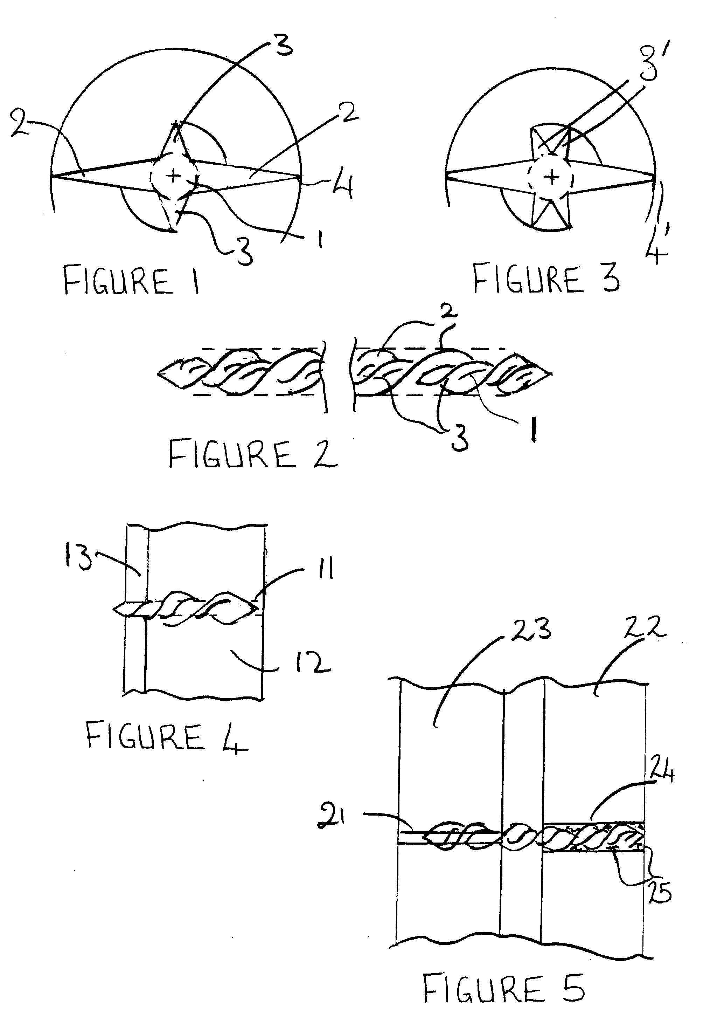

The fastener shown in Figure 1 has a core 1 having a diameter of 1.5mm. Extending from opposite sides of the core are a pair of major fins 2 and a pair of minor fins 3. The former have a tip to tip diameter of 6mm and the latter have such a diameter of 3mm. The fins are formed so as to follow a 30° helix. The ends of the fastener are pointed. It has a typical overall length of 100mm. The material of the fastener is stainless steel. It is work hardened in its formation, which will be by rolling, as described below.

Figure 3 shows another fastener, in which two pairs of minor fins 3' are provided. Also in contrast to the first fastener, where the edges 4 of the major fins are sharp, the edges 4' of the major fins 3' of this fastener are blunt.

Referring to Figure 4, the fastener thereshown has been hammered into a 2.5mm pilot bore 11 through a timber 12 and a piece of steel work 13. In the timber, the minor fins have lightly gripped the timber, but the major fins have cut into the timber to cause the fastener to twist on its helix as it is driven in. When the fastener reaches the steel, the minor fins have a diameter to engage and cut into the pilot bore for good grip. The major fins are either bent over at the edge of the pilot bore in the steel work as the fastener is driven into it, to occupy the space between the core and the bore; or they are sheared of at the edge. Where they do enter the pilot bore and jam against it, they enhance the grip in it given by the minor fins. It can be seen that the major fins provide the bulk of the grip in the timber, whilst the minor fins do so in the steel work. Where the fastener is being used to secure two materials into which the major fins can cut, they will provide the bulk of the grip in both.

Turning to Figure 5, the fastener thereshown cannot penetrate as far as the second brick skin 23 without a clearance bore 24 having been drilled in the first skin 22. However the latter has a pilot bore 21, into which the fastener can be driven. Whilst this pilot bore may not always be necessary, engagement of the minor fins with it does help to maintain the alignment of the fastener and obviate it breaking by bending. The clearance bore will normally be of greater diameter than that of the major fins, to allow a driving sleeve to surround the fastener in the first skin as it is driven into the second skin. This is conventional. Also as conventionally, the clearance bore is filled with adhesive 25 after the driving sleeve has been withdrawn.

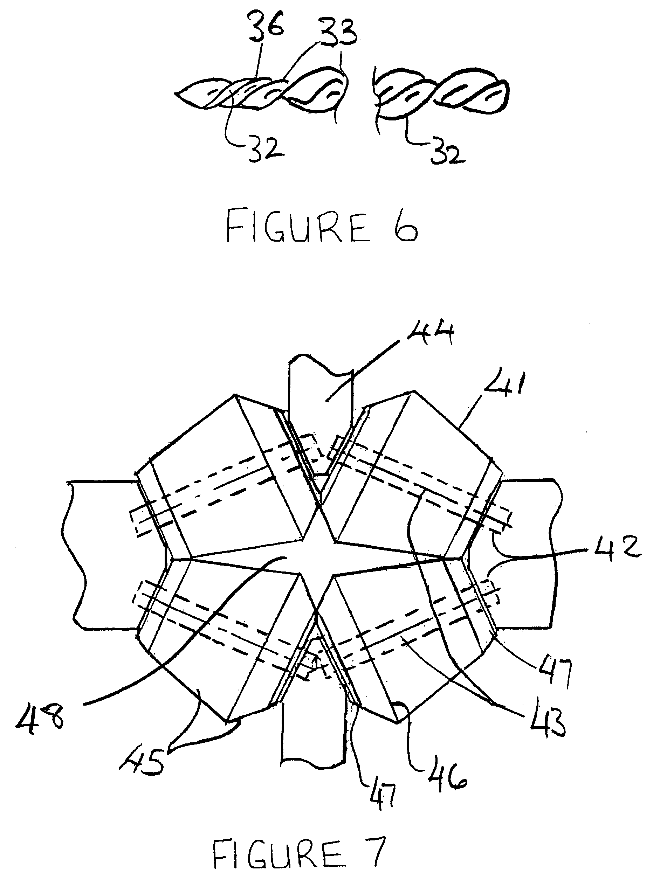

Turning now to Figure 6, the fastener there shown is similar to that of Figure 2, except that the relatively short nose portion 36 of the fastener has had the major fins 32 ground off to the level of the minor fins 33. This helps the drivability of the fastener into steel in a use such as that of Figure 4.

Production of the above fasteners, that is to say having one major fin, one minor fin, another major fin and another minor fin evenly circumferentially spaced around the core, is achieved by use of a roller set as shown in Figure 7. Four similar rollers 41 are mounted on shafts 42 having their central axes 43 rhombically arranged in a plane. The shafts are provided with bearings 44. Each shaft has two frusto-conical portions 45 arranged base to base 46. At the rollers' ends, they have further tapered portions 47 which abut and regulate the position of the rollers and hence the shape of the nip gap 48 centrally of the rollers, the shape being the cross-sectional shape of the fasteners to be produced. For their production, suitable wire stock is passed through the nip gap and in the process becomes shaped as required and work hardened at the same time. The finned product is then twisted, cropped, pointed and if necessary ground back at one end.

To produce the shape of Figure 3, additional rollers are provided.

The invention is not intended to be restricted to the details of the above described embodiments. In particular, differing numbers f major and minor fins may be incorporated. For steelwork, the angle of the helix may be less than 30°. It is envisaged that the fasteners may vary in length from 20mm to 300mm.

## Claims

1. A fastener comprising:
• a longitudinal core (1),
• at least two minor fins (3) extending along the core (1) and
• at least two major fins (2) extending along the core (1), the major fins alternating with the minor fins around the core,
the fastener being helically twisted
**characterised in that** the ratio of diameter of the major fins (2) to the minor fins (3) is between 1.5:1 and 3:1
and **in that** the both the major and the minor fins taper to an edge
such that the major fins are adapted for cutting into a material having one density and the minor fins are adapted for cutting into a material having a higher density, the major fins being adapted to deform or shear off on entry into the material having the higher density.

2. A fastener as claimed in claim 1, wherein the fastener is of hardened steel.

3. A fastener as claimed in claim 1 or claim 2, wherein the ratio of diameter of the major fins (2) to the minor fins (3) is of the order of 2:1.

4. A fastener as claimed in claim 1, claim 2 or claim 3, wherein the fastener is pointed at both ends.

5. A fastener as claimed in any preceding claim, wherein the fastener is pointed at one end only.

6. A fastener as claimed in any preceding claim, wherein the major fins (2) do not extend to one end at least of the fastener.

7. A fastener as claimed in any preceding claim, wherein the fastener is of stainless steel or galvanised steel.

8. A fastener as claimed in any preceding claim, wherein the fastener has one pair of major fins (2) and one pair of minor (3) fins.

9. A fastener as claimed in any one of claims 1 to 7, wherein the fastener has at least two major fins (2) and at least two minor fins (3), the total number of fins being even and greater than four.

10. A method of producing a fastener as claimed in claim 8, the method consisting in the steps of:
• providing four rollers (41) rotatable about respective axes (43) quadrilaterally arranged in a plane, each roller having at least two frusto-conical portions (45) arranged base to base (46) and adjacent rollers touching or closely approaching each other at the respective small diameter ends of the frusto-conical portions, gaps between the rollers defining the shape of the fins of the fastener;
• passing a wire between the rollers to form it to the major and minor fin shape thereof and to work harden it;
• helically twisting the finned product;
• cropping the product to fastener lengths; and
• pointing the lengths.

11. A method of producing a fastener as claimed in claim 9, the method consisting in the steps of:
• providing a plurality of rollers (41) corresponding to the number of fins, the rollers being rotatable about respective axes (43) arranged in a plane, each roller having at least two frusto-conical portions (45) arranged base to base (46) and adjacent rollers touching or closely approaching each other at the respective small diameter ends of the frusto-conical portions, gaps between the rollers defining the shape of the fins of the fastener;
• passing a wire between the rollers to form it to the major and minor fin shape thereof and to work harden it;
• helically twisting the finned product;
• cropping the product to fastener lengths; and
• pointing the lengths.

## Patentansprüche

1. Befestigungsmittel, mit:
• einem länglichen Kern (1)
• mindestens zwei Nebenrippen (3), die sich entlang des Kerns (1) erstrecken, und
• mindestens zwei Hauptrippen, die sich entlang des Kerns (1) erstrecken und mit den Nebenrippen um den Kern herum sich abwechseln,
wobei das Befestigungsmittel schraubenförmig verschlungen ist, **dadurch gekennzeichnet, daß** das Verhältnis der Durchmesser der Hauptrippen (2) zu den Nebenrippen (3) zwischen 1,5:1 und 3:1 liegt, und daß sich sowohl die Hauptrippen als auch die Nebenrippen zu einer Kante hin verjüngen, derart, daß die Hauptrippen ausgestaltet sind, um in ein Material mit einer Festigkeit einzuschneiden und die Nebenrippen ausgestaltet sind, um in ein Material mit einer höheren Festigkeit einzuschneiden, wobei die Hauptrippen so ausgebildet sind, daß sie beim Eintritt in das Material mit der höheren Festigkeit sich verformen oder abscheren.

2. Befestigungsmittel nach Anspruch 1, **dadurch gekennzeichnet, daß** das Befestigungsmittel aus gehärtetem Stahl besteht.

3. Befestigungsmittel nach Anspruch 1 oder 2, **dadurch gekennzeichnet, daß** das Verhältnis der Durchmesser der Hauptrippen (2) zu den Nebenrippen (3) in der Größenordnung von 2:1 liegt.

4. Befestigungsmittel nach Anspruch 1, Anspruch 2 oder Anspruch 3, **dadurch gekennzeichnet, daß** das Befestigungsmittel an beiden Enden zugespitzt ist.

5. Befestigungsmittel nach einem der vorstehenden Ansprüche, **dadurch gekennzeichnet, daß** das Befestigungsmittel nur an einem Ende zugespitzt ist.

6. Befestigungsmittel nach einem der vorstehenden Ansprüche, **dadurch gekennzeichnet, daß** sich die Hauptrippen (2) zumindest nicht bis zu einem Ende des Befestigungsmittels erstrecken.

7. Befestigungsmittel nach einem der vorstehenden Ansprüche, **dadurch gekennzeichnet, daß** das Befestigungsmittel aus rostfreiem Stahl oder verzinktem Stahl besteht.

8. Befestigungsmittel nach einem der vorstehenden Ansprüche, **dadurch gekennzeichnet, daß** das Befestigungsmittel ein Paar Hauptrippen (2) und ein Paar Nebenrippen (3) aufweist.

9. Befestigungsmittel nach einem der Ansprüche 1 bis 7, **dadurch gekennzeichnet, daß** das Befestigungsmittel mindestens zwei Hauptrippen (2) und mindestens zwei Nebenrippen (3) hat, wobei die Gesamtzahl von Rippen gerade und größer als Vier ist.

10. Verfahren zum Herstellen eines Befestigungsmittels nach Anspruch 8, wobei das Verfahren in folgenden Schritten besteht:
• Vorsehen von vier Rollen (41), die um zugehörige Achsen (43) drehbar sind, die in einer Ebene im Viereck angeordnet sind, wobei jede Rolle mindestens zwei kegelstumpfförmige Abschnitte (45) aufweist, die Basis an Basis (46) angeordnet sind und benachbarte Rollen einander an den jeweiligen Enden mit geringem Durchmesser der Kegelstumpfabschnitte berühren oder nahe beieinander liegen, wobei Zwischenräume zwischen den Rollen die Form der Rippen des Befestigungsmittels definieren;
• Durchführen eines Drahts zwischen den Rollen, um ihn in die Form mit den Haupt- und Nebenrippen umzuformen und zu verfestigen;
• schraubenförmiges Verdrehen des mit Rippen versehenen Erzeugnisses;
• Abscheren des Erzeugnisses auf die Länge des Befestigungsmittels; und
• Anspitzen der Abschnitte.

11. Verfahren zum Herstellen eines Befestigungsmittels nach Anspruch 8, wobei das Verfahren in folgenden Schritten besteht:
• Vorsehen einer Mehrzahl von Rollen (41) entsprechend der Anzahl der Rippen, die um zugehörige Achsen (43) drehbar sind, wobei jede Rolle mindestens zwei kegelstumpfförmige Abschnitte (45) aufweist, die Basis an Basis (46) angeordnet sind und benachbarte Rollen einander an den jeweiligen Enden mit geringem Durchmesser der Kegelstumpfabschnitte berühren oder nahe beieinander liegen, wobei Zwischenräume zwischen den Rollen die Form der Rippen des Befestigungsmittels definieren;
• Durchführen eines Drahts zwischen den Rollen, um ihn in die Form mit den Haupt- und Nebenrippen umzuformen und zu verfestigen;
• schraubenförmiges Verdrehen des mit Rippen versehenen Erzeugnisses;
• Abscheren des Erzeugnisses auf die Länge des Befestigungsmittels; und
• Anspitzen der Abschnitte.

## Revendications

1. Une fixation comprenant :
• un noyau longitudinal (1),
• au moins deux ailettes mineures (3) s'étendant le long du noyau (1) et
• au moins deux ailettes majeures (2) s'étendant le long du noyau (1), les ailettes majeures alternant avec les ailettes mineures autour du noyau,
• la fixation étant torsadée hélicoïdalement,
**caractérisée en ce que** le rapport de diamètres des ailettes majeures (2) par rapport aux ailettes mineures (3) est entre 1,5:1 et 3:1
et **en ce que** les ailettes majeures et mineures vont toutes deux en se réduisant jusqu'à un bord.
de telle manière que les ailettes majeures soient adaptées pour entailler un matériau ayant une densité et les ailettes mineures soient adaptées pour entailler un matériau ayant une densité supérieure, les ailettes majeures étant adaptées pour se déformer ou se cisailler au moment où elles entrent dans le matériau ayant la densité supérieure.

2. Une fixation telle que revendiquée dans la revendication 1, dans laquelle la fixation est en acier durci.

3. Une fixation telle que revendiquée dans la revendication 1 ou la revendication 2, dans laquelle le rapport de diamètres des ailettes majeures (2) par rapport aux ailettes mineures (3) est de l'ordre de 2:1.

4. Une fixation telle que revendiquée dans la revendication 1, la revendication 2 ou la revendication 3, dans laquelle la fixation est pointée aux deux extrémités.

5. Une fixation telle que revendiquée dans l'une des revendications précédentes, dans laquelle la fixation est pointée à une extrémité seulement.

6. Une fixation telle que revendiquée dans l'une des revendications précédentes, dans laquelle les ailettes majeures (2) ne s'étendent pas jusqu'à l'une des extrémités au moins de la fixation.

7. Une fixation telle que revendiquée dans l'une des revendications précédentes, dans laquelle la fixation est en acier inoxydable ou en acier galvanisé.

8. Une fixation telle que revendiquée dans l'une des revendications précédentes, dans laquelle la fixation possède une paire d'ailettes majeures (2) et une paire d'ailettes mineures (3).

9. Une fixation telle que revendiquée dans l'une des revendications 1 à 7, dans laquelle la fixation possède au moins deux ailettes majeures (2) et au moins deux ailettes mineures (3), le nombre total d'ailettes étant pair et supérieur à quatre.

10. Un procédé de production d'une fixation telle que revendiquée dans la revendication 8, le procédé consistant dans les étapes suivantes :
• disposer quatre galets (41) pouvant tourner autour d'axes respectifs (43) quadrilatéralement configurés dans un plan, chaque galet possédant au moins deux parties tronconiques (45) configurées base à base (46) et les galets adjacents se touchant ou s'approchant très près l'un de l'autre aux extrémités respectives de petit diamètre des parties tronconiques, les intervalles entre les galets définissant la forme des ailettes de la fixation ;
• faire passer un fil entre les galets pour le conformer à la forme d'ailettes majeures et mineures de ceux-ci et l'écrouir ;
• torsader hélicoïdalement le produit ailetté ;
• couper le produit en longueurs de fixations ; et
• pointer les longueurs.

11. Un procédé de production d'une fixation telle que revendiquée dans la revendication 9, le procédé consistant dans les étapes suivantes :
• disposer une pluralité de galets (41) correspondant au nombre d'ailettes, les galets pouvant tourner autour d'axes respectifs (43) configurés dans un plan, chaque galet possédant au moins deux parties tronconiques (45) configurées base à base (46) et les galets adjacents se touchant ou s'approchant très près l'un de l'autre aux extrémités respectives de petit diamètre des parties tronconiques, les intervalles entre les galets définissant la forme des ailettes de la fixation ;
• faire passer un fil entre les galets pour le conformer à la forme d'ailettes majeures et mineures de ceux-ci et l'écrouir ;
• torsader hélicoïdalement le produit ailetté ;
• couper le produit en longueurs de fixations ; et
• pointer les longueurs.
